Europäisches Patentamt

European Patent Office

Office européen des brevets

(19)

(11) Publication number: **0 045 583**
**B1**

(12) **EUROPEAN PATENT SPECIFICATION**

(45) Date of publication of patent specification: **16.07.86**

(21) Application number: **81303228.1**

(22) Date of filing: **14.07.81**

(60) Publication number of the earlier application in accordance with Art. 76 EPC: **0 045 583**

(51) Int. Cl.⁴: **C 25 B 9/00, C 25 B 1/00, C 25 B 1/04, C 25 B 1/10**

(54) **Electrolysis apparatus.**

(30) Priority: **31.07.80 GB 8025021**

(43) Date of publication of application:
**10.02.82 Bulletin 82/06**

(45) Publication of the grant of the patent:
**16.07.86 Bulletin 86/29**

(84) Designated Contracting States:
**CH DE FR IT LI NL**

(56) References cited:
**CH-A- 334 613
DE-C- 585 596
DE-C- 625 659
DE-C- 626 731
DE-C- 869 941
GB-A- 2 028 372
US-A- 2 075 688
US-A- 2 881 123
US-A- 3 652 431**

(73) Proprietor: **Spirig, Ernst
P.O.Box 160 Speerstrasse 14
CH-8640 Rapperswil (CH)**

(72) Inventor: **Spirig, Ernst
P.O.Box 160 Speerstrasse 14
CH-8640 Rapperswil (CH)**

(74) Representative: **Wain, Christopher Paul et al
A.A. THORNTON & CO. Northumberland House
303-306 High Holborn
London WC1V 7LE (GB)**

Courier Press, Leamington Spa, England.

## Description

This invention relates to electrolysis apparatus, especially for the electrolysis of water, and is applicable to apparatus for producing oxyhydrogen gas (detonating gas) and to apparatus producing oxygen and hydrogen at separate outlets. The invention is concerned with improved cooling of the apparatus and electrolyte.

My British patent application 7914972 relates to a simple construction of apparatus for generating detonating gas, comprising a plurality of parallel-disposed electrode plates clamped together with a ring-shaped spacer between each pair of electrodes: the space between each pair of electrodes, and enclosed by the spacer, defines a cell. A d.c. electrical supply is connected across the two outermost electrode plates so as to connect the plurality of cells in series. Fresh electrolyte is supplied through an inlet to one end cell and electrolyte and generated gas flow from cell-to-cell (through apertures formed through the electrode plates near the top of the cells) until the final cell, where the detonating gas leaves by way of an outlet, mixed with a certain amount of electrolyte.

In any electrolysis apparatus having a plurality of cells arranged in series both on the electrical and electrolyte flow paths, the electrolyte and gas increase in temperature from cell-to-cell through the apparatus towards the outlet. The rate of gas generation increases with the current flowing, but so also does the heat generated. The electrolyte entering any cell (after the first) is the already-heated electrolyte from the previous cell, so that with many cells arranged in series a limit temperature might well be reached, where the electrolyte entering the next cell is too high. In my British patent application 7914972, cooling is provided for in that the electrode plates project outwardly beyond the spacers and the surfaces of these projecting portions of the plates are available for cooling by ambient air or by pre-cooled air (forced cooling).

By making the electrode plates thicker to increase heat flow and increasing the surface areas in contact with the cooling air, heat dissipation can be improved. Appropriate choice of metals also assists cooling: electrodes of copper plated with nickel are effective. Less costly steel electrodes, also nickel plated, have lower heat conductivity, leading to poorer cooling: increasing the thickness of these electrodes to improve heat flow leads to increased weight and cost. Another appropriate metal is stainless steel and this does not require a nickel coating at low electrolyte temperatures: however, if higher temperatures do occur, then the stainless steel will be attacked by the hot electrolyte.

It is generally desirable, therefore, to improve the cooling and enable higher rates of gas generation. Improved rates of hydrogen or hydrogen-and-oxygen generation are of particular interest in the development for the future of hydrogen engines for cars. Hydrogen may be stored, at ambient temperature and avoiding very high pressures, in iron-titanium pellet tanks: the hydrogen is absorbed by crystals of iron-titanium within a tank and the hydrogen is not released accidentally even if the tank is punctured. Experimental cars being developed on this principle lack a low-cost, high-rate hydrogen generator able to produce sufficient hydrogen over-night to recharge a spent tank. Such generators might even be installed in the household. Experimental cars to-date demonstrate a range of about 200 kilometres before a full hydrogen tank requires re-charging, if the car is driven under reasonable conditions. The capacity of the tank corresponds with 32000 litres of hydrogen at ambient temperatures. In accordance with Faraday's law, a current of 26.8 amps flowing for one hour will produce 11.2 litres of hydrogen and 5.6 litres of oxygen. As an example of a household generator, working from a 380 volts a.c. supply, a rectified supply of 380 volts d.c. may be produced without using a transformer: this could feed an apparatus having 190 cells in series (each with the usual voltage drop of about 2 volts). With a current of 100 amps flowing, the equivalent is 19,000 amps flowing through a single cell, generating $19,000 \div 26.8 \times 11.2 = 8082$ litres of hydrogen in one hour. Thus the tank of 32000 litres would be re-charged within 4 hours: or, for example, a current of 50 amps would re-charge the tank in 8 hours.

Because the tank accepts only hydrogen, the generator must either produce hydrogen separated from oxygen, or from the detonating gas the oxygen must be eliminated for example by using it up in an appropriate chemical reaction, or by employing a molecular sieve or other means for separating gases.

A detonating gas generator, such as the apparatus disclosed in my British patent application 7914972, does generally operate with lower heat losses than does an apparatus producing oxygen and hydrogen separately, because the path of the electrical current through the electrolyte can be kept very short. Also, the cell construction is much simpler because there is no need for a diaphragm to divide the cell into oxygen and hydrogen sections. Nevertheless, this invention is applicable both to a detonating· gas generator and to an apparatus for generating oxygen and hydrogen separately.

In accordance with this invention, the electrolysis apparatus is characterised in that the arrangement of cells includes at least one series of gas generating cells followed (on the electrolyte and gas flow path) by at least one cell having its pair of electrode plates electrically short-circuited so that this cell is prevented from functioning as a gas generating cell and instead functions as a cooling cell.

The heat extracted from the apparatus may simply be fed back and used for the heating system of the house, where it is a household apparatus, thus rendering the proposition of the hydrogen car engine more attractive: heat energy otherwise wasted and lost is thus utilised.

Embodiments of this invention will now be described, by way of examples only, in which:

FIGURE 1 is a vertical longitudinal section through an embodiment of detonating gas generator;

FIGURE 1A is a graph schematically illustrating the variation of temperature through a prior art apparatus, the apparatus of Figure 1 and the apparatus of Figure 2;

FIGURE 2 is a section similar to Figure 1 through a modified detonating gas generator;

FIGURES 3a and 3b show arrangements of the electrode plates and spacers for facilitating assembly and Figure 3c shows a channel on which they may be assembled;

FIGURE 3d is a perspective view of another modified detonating gas generator;

FIGURE 4 is a section through a further modified detonating gas generator with supplementary cooling;

FIGURE 5 is a section through a further modified apparatus showing a preferred clamping means;

FIGURE 6 is a longitudinal section, on the line VI—VI of Figure 7, through an embodiment of apparatus for generating oxygen and hydrogen at separate outlets;

FIGURE 7 is a cross-section through a gas generating cell of the apparatus of Figure 6;

FIGURE 7A is a cross-section through a special spacer of the apparatus;

FIGURE 8 is a cross-section through a cooling cell of the apparatus of Figures 6 and 7; and

FIGURE 9 is a vertical section through outlet cooling cells provided on an electrolyte tank.

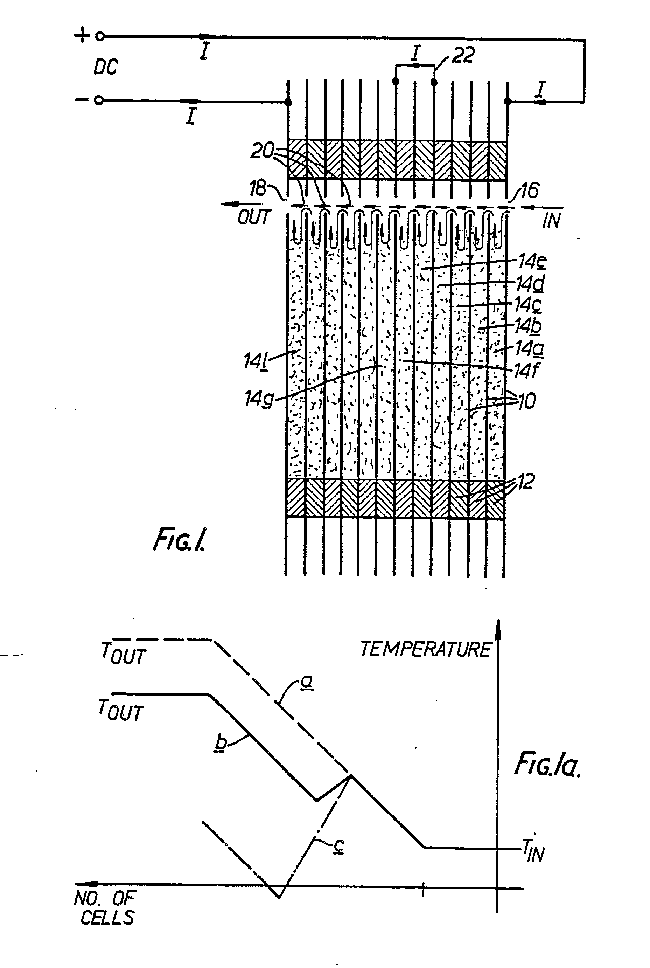

Figure 1 shows an electrolysis apparatus in the form of a detonating gas generator basically as disclosed in my British patent application 79.14972. The generator comprises a plurality of parallel disposed electrode plates 10 clamped together (by means not shown) with a ring-shaped spacer 12 between each pair of electrodes. The space between each pair of electrodes, and enclosed by the spacer 12, defines a cell and these are referenced 14a, 14b, 14c. The spacers may be circular or any other convenient shape and the electrode plates project beyond the spacers to provide cooling surfaces in contact with ambient air. A d.c. electrical source is connected across the two outermost electrode plates as shown to connect the cells electrically in series. An inlet 16 for fresh electrolyte is provided into the first cell 14a and electrolyte and generated gas flow from cell-to-cell through apertures 20 formed in the electrode plates (near the top of the cell), eventually arriving at the final cell 14l and then passing through an outlet 18 from the final cell, inlet 16 and outlet 18 comprising apertures in the respective outermost electrode plates.

In accordance with this invention, after a first series of gas generating cells 14a—14d, two cells 14e and 14f are arranged as cooling cells, and thereafter a series of gas generating cells 14g—14l follows. The cooling cells are effective to cool by provision of an electrical short circuit placed across them: in the exmaple shown this short is represented by an electrical connection 22 between the outermost electrode plates of the series of cooling cells. Thus no voltage drop occurs across the cells and no gas generation takes place: instead, in passing through these cells, the gas and electrolyte cool. This is represented in the schematic graph of Figure 1A by line b, whilst line a represents the progressively increasing temperature (from inlet temperature T in to outlet temperature T out) which would occur if all cells were active in generating gas. Instead of two cooling cells, a single cooling cell or a greater number of cooling cells may be provided. Also, a number of cooling cells may be spaced through the entire series of cells, the cooling cells and gas generating cells alternating, with the number of cells in each set chosen as desired. For providing the electrical connection 22, the spacers for the cooling cells might be electrically conductive (the spacers for the gas generating cells being necessarily electrically insulating).

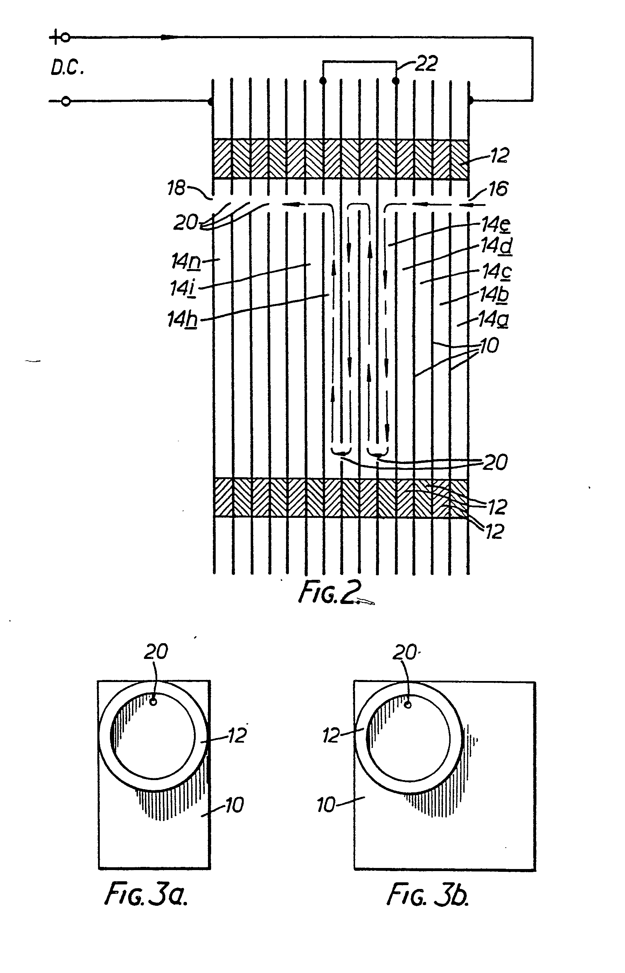

Figure 2 shows a modification in which, in the cooling cells 14e—14h, the apertures 20 in the electrode plates are alternately near the top and near the bottom of the cells, so that the electrolyte and gas follow a lengthy path alternately downwards and then upwards in adjacent cells, as shown by the arrows, therefore increasing the heat flow into the metal electrode plates. This result may be achieved by using identical electrode plates, with alternate ones turned through 180° in the cooling cells. Line c in Figure 1b shows the improved rate of cooling which is obtained by this arrangement.

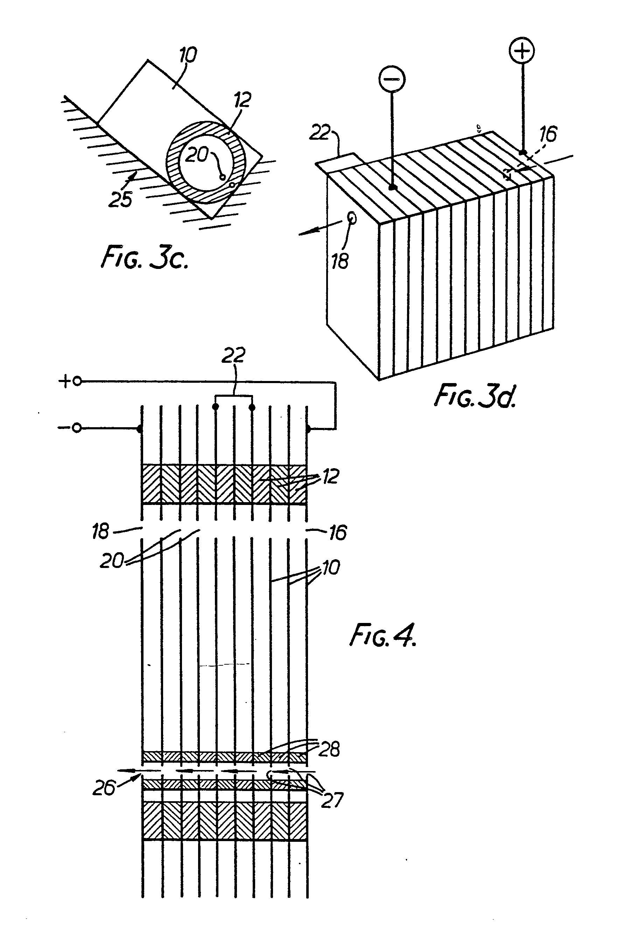

With a large number of electrode plates and spacers to be clamped together, it is important to ensure a precise alignment otherwise the stack may become unstable under the clamping pressure. Figures 3a and 3b show arrangements of electrode plates 10 and spacers 12 for facilitating precise alignment in assembly, applicable to all apparatus in accordance with this invention and to apparatus in accordance with invention of my British patent application 7914972. Thus, in Figure 3a, the electrode plate has 3 sides tangential to the outer circumference of the circular spacer, and in Figure 3b the electrode plate has two adjacent sides tangential to the outer circumference of the spacer. Figure 3c shows a convenient assembly technique, in which an inverted V shaped channel is provided for receiving the electrode plates and spacers during assembly: precise alignment is ensured by the action of gravity placing each component into contact with the two sides of the V.

Preferably as shown in Figures 3a and 3b, the spacers are disposed at this top edge of the electrode plates so that the cooling surfaces project to the bottom of the cells.

Figure 3d shows a further modified apparatus in which a set of cooling cells is arranged at the outlet end of the overall series of cells, so that the gas and electrolyte leaving the apparatus is cooled preferably to ambient temperature.

Figure 4 shows a supplementary cooling arrangement applicable to all apparatus of this invention and to the apparatus of my British patent application 7914972. Thus, a cooling fluid is passed through at least one cooling duct 26 provided through the apparatus, either within the spacers as shown or outside them. The duct 26 is formed by aligned apertures 27 in the electrode plates and further electrically insulating spacers 28. Preferably the duct 26 is at the lower part of the apparatus and the cooling fluid must be electrically insulating, e.g. a heat exchanger oil or a heat energy pump fluid. If the apparatus is running at a low temperature, the fluid may be fed to a heat pump and the output temperature would by say 70°C and appropriate for feeding directly into the household heating system.

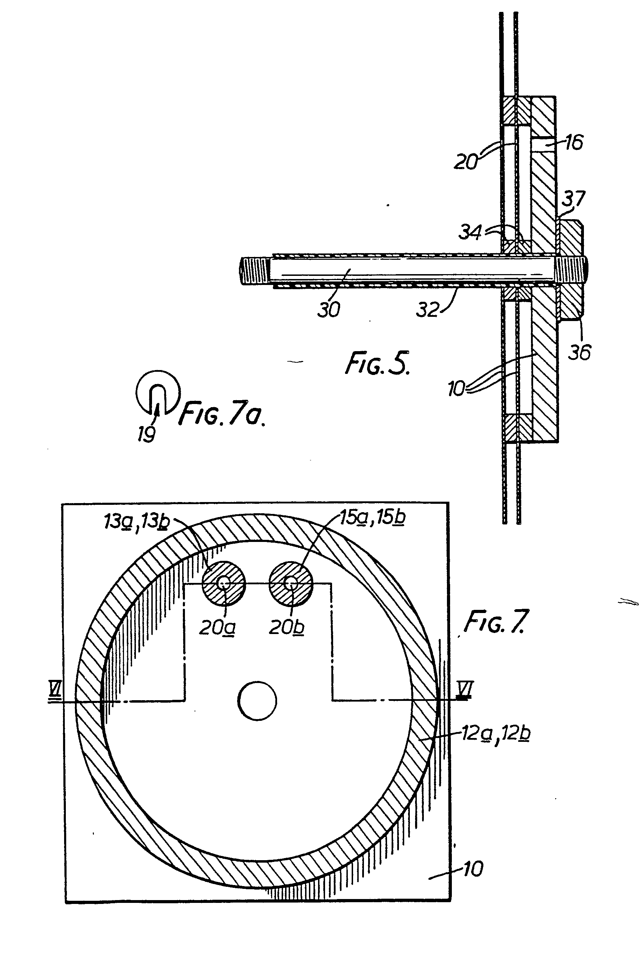

Figure 5 shows a clamping arrangement applicable to all apparatus in accordance with this invention and also to the apparatus of my British patent application 7914972. Thus, a bolt 30 extends centrally through the stack and the peripheral bolts of my application 7914972 are dispensed with. This minimises the metal work on the electrodes, provides heat flow from the outer cells and provides for a stable stack of cells and spacers. Each electrode plate is formed with only the single central aperture for the bolt, in addition to the aperture or apertures 20. Preferably as shown the outermost electrode plates are thicker than the others and need be only the same size and shape as the outer circumference of the main spacer rings 12. The bolt is provided with an electrically insulating sleeve 32 (e.g. a heat shrunk tube or a rigid plastics tube) and an additional spacer 34 is provided in each cell around the bolt to seal that cell. At each end of the bolt a nut 36 is applied with an electrically insulating washer 37 interposed between the nut and the underlying end plate.

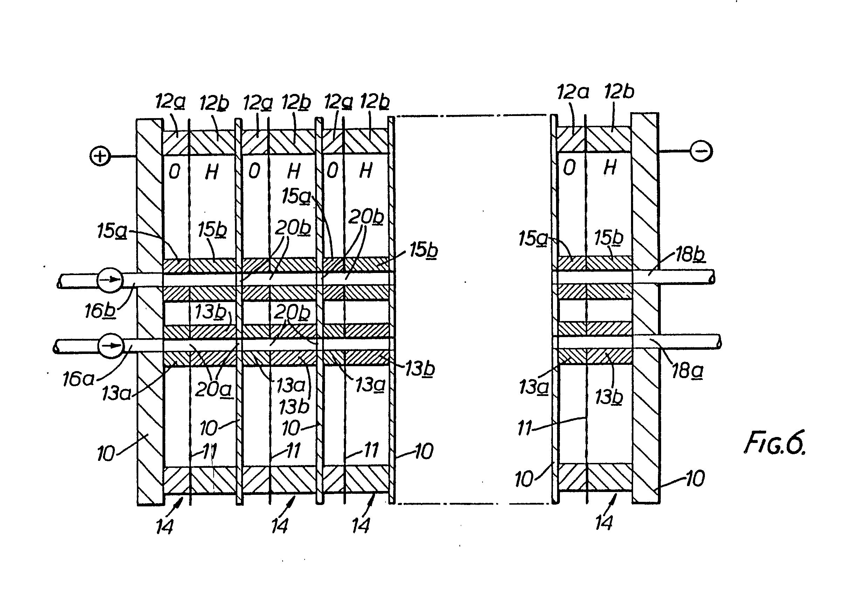

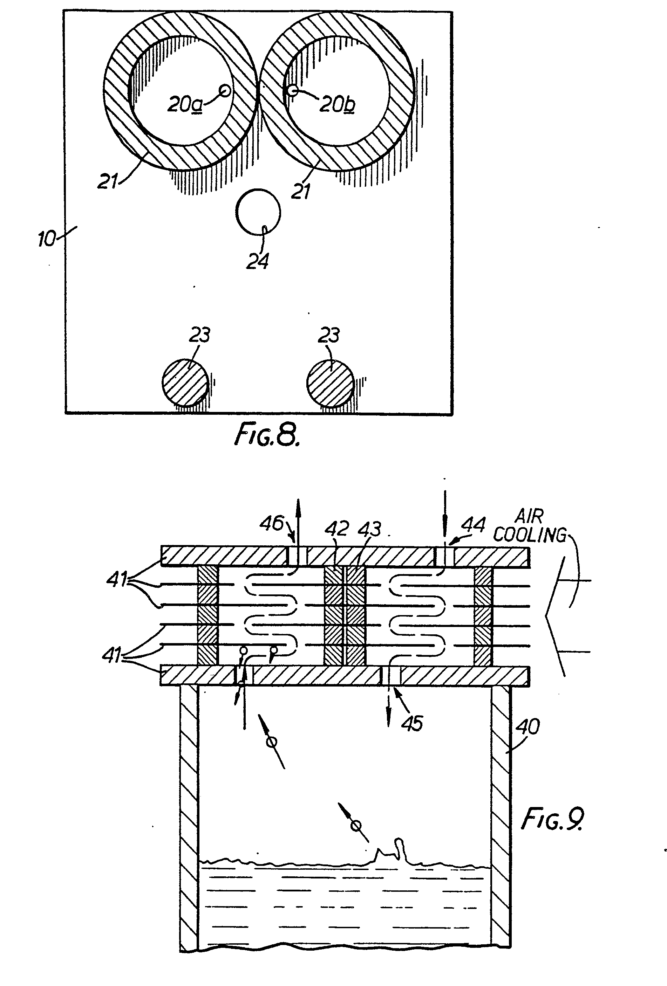

Figures 6, 7 and 8 show an apparatus for providing hydrogen and oxygen at separate outlets. This apparatus is described and claimed in the divisional European Patent Application 84106914.9 publication number EP—A—131,173. The apparatus comprises a plurality of parallel metal electrode plates 10 defining gas generating cells 14 (and also some cooling cells as will be described in relation to Figure 8). Between each pair of adjacent plates in the gas generating cells, a diaphragm 11 is provided and is spaced from the respective plates by spacers 12a, 12b. Thus, each gas generating cell 14, formed between a respective pair of adjacent plates, is divided into oxygen and hydrogen-generating sections by the diaphragm 11. The outermost or end electrode plates are thicker and are connected respectively to the positive and negative poles of the d.c. electricity source. Figure 7 shows square electrode plates and circular spacers, but other shapes may be envisaged.

The outermost electrode plate for connection to the positive pole is provided with inlets 16a, 16b for electrolyte, and the opposite outermost electrode plate is provided with outlets 18a, 18b respectively supplying hydrogen and oxygen. The intermediate electrode plates and diaphragms are each provided with a pair of apertures 20a, 20b at the same horizontal level near the top of the cells. The inlet 16a and outlet 18a are aligned with the apertures 20a, whilst the inlet 16b and outlet 18b are aligned with the apertures 20b. Moreover, a first series of tubular spacers 13a, 13b is provided in alignment with apertures 20a and a second series of tubular spacers 15a, 15b is provided in alignment with apertures 20b.

The arrangement is such that, in each gas generating cell, the diaphragm 11 is supported on opposite sides, around its aperture 20a, by spacers 13a, 13b spacing it from its respective electrode plates in the oxygen and hydrogen sections. Likewise, the diaphragm 11 is supported on its opposite sides, around its aperture 20b, by spacers 15a, 15b spacing it from its respective electrode plates in the oxygen and hydrogen sections. The tubular spacers 13b and 15a are each formed with a longitudinal slot 19 as shown in Figure 7a. Accordingly, inlet 16a and hydrogen outlet 18a communicate only with the hydrogen sections of the cells, the communication being effected through the tubular spacers 13a, 13b and the slots 19 in spacers 13b. Similarly, inlet 16b and oxygen outlet 18b communicate only with the oxygen sections of the cells, the communication being through the tubular spacers 15a, 15b and the slots 19 in the spacers 15a.

Cooling cells may be provided, as previously described for the apparatus of Figure 1. The construction of such a cooling cell is illustrated in Figure 8, and differs from a gas generating cell in that the diaphragm 11 and the spacers 12a, 12b are dispensed with: instead, two spacers 21 (for example circular) are provided between the two electrode plates of the cell, respectively encircling the apertures 20a, 20b and defining hydrogen and oxygen cooling cell sections, and further spacers 23 are provided near the bottom to retain the stability of the structure. The outermost electrode plates of the cooling cell or cells are electrically short circuited so that the cells are inactive and instead effect cooling.

The stack of electrode plates and spacers are clamped together, for example by a central bolt (as shown in Figure 5) inserted through apertures 24 in the plates (Figure 8).

In operation of the apparatus of Figures 6 to 8, electrolyte is fed through inlets 16a and 16b into the hydrogen and oxygen sections of the first cell, and from this first cell it proceeds to the respective hydrogen and oxygen sections of the other cells in succession. Oxygen is generated at the positive plate of each cell and hydrogen is generated at the negative plate of each cell: the oxygen and hydrogen flow through the cells in succession to the respective oxygen and hydrogen outlets 18b, 18a. The diaphragms 11 prevent the flow of gas from one gas section to the other within the individual cells, but permit electrical current flow. Preferably the hydrogen section of each cell is twice the volume of the oxygen section (for example by a difference in width of the sections, as shown), to take account of the fact that twice as much hydrogen as oxygen is generated, and tending to equalise the pressures on the opposite sides of the diaphragm.

The electrolyte is preferably fed to the inlets 16a, 16b through one-way valves to prevent the back-flow of oxygen and hydrogen. Preferably a differential pressure sensor is coupled to the outlets 18a, 18b, controlling electrical valves causing the venting of one gas volume should the other gas volume drop in pressure (for example owing to consumption by the user), again in order to reduce the difference in the pressures on opposite sides of each diaphragm.

The apparatus of Figures 6 to 8 differs from prior art apparatus, also arranged to produce oxygen and hydrogen at separate outlets, by the feature (amongst others) that is not not necessary to provide two connections to the exterior for each cell section (one for electrolyte and one for the generated gas).

In another development to increase efficiency in both cooling and extracting heat for use in space-heating in the home, comprises placing the stack of cells in a vessel filled with a heat exchanging fluid. This fluid is circulated from the vessel, through a heat exchanger and back to the vessel, the heat exchanger output being included in the heating system. This development is preferable especially for an apparatus with a large number of cells. The advantage relative to the arrangement of Figure 4 would be that the cooling circuit 26-27-28 within the cells would be dispensed with, thus maximising the effective cell area and dispensing with the requirement for the additional spacers 28.

A further development to increase cell efficiency comprises introducing ultrasonic or sonic vibrations into the cells, in order to remove more quickly the gas bubbles from the electrode plates. Gas bubbles generated at the electrode plate surfaces have a negative effect on the electrical current flow, effectively providing a series resistance causing increased heat losses. Also the resistance to heat flow for cooling is increased. Ultrasonic or sonic vibrations introduced into the cells will remove the bubbles much quicker, to reduce these drawbacks, and also aiding quicker separation of the electrolyte. The vibrations may be introduced by electro-mechanical transducers (e.g. piezoceramic or magnetostrictive devices) mounted on the outside of the end electrode plates, or mounted on the inside and/or outside of a vessel filled with fluid in which the stack of cells is immersed. This vessel may be the cooling fluid vessel described in the last preceding paragraph above.

In the case of the detonating gas generators preferably the electrolyte is supplied to the inlet 16 through a one-way valve effective to prevent the back-flow of detonating gas.

In a modification applicable to all embodiments described above, it is proposed to arrange the cells in a number of separate groups connected by tubing to carry gas flow. For example, a stack of active cells may be connected to a stack of cooling cells by tubing, the outlet of the cooling cell stack being connected by further tubing to another stack of active cells, and so on. This is advantageous where it is necessary to limit the overall length of the apparatus, the several stacks of cells being then arranged side-by-side for example.

Figure 9 shows a tank through which generated gas may be fed after leaving the final cell, in any of the arrangements described above. The tank 40 is closed at its top by the lowest of a stack of flat plates 41, horizontally disposed. Each adjacent pair of plates are separated by two circular spacers 42, 43, thus defining two series of cooling cells. The uppermost plate 41 is provided with an inlet aperture 44 and the plates 41 within the spacers 43 are provided with staggered apertures for constraining the incoming gas and electrolyte mixture to undergo a tortuous path before passing through an aperture 45 in the lowermost plate 41 and into the tank 40. The electrolyte splashes onto a body of electrolyte at the bottom of the tank, and the gas (still possibly with some electrolyte and water vapour) passes through a similar arrangement of cooling cells defined by spacers 42, to finally issue from an outlet 46 in the uppermost plate 41. Water vapour or electrolyte separating from the gas in this final series of cooling cells returns to the tank and the body of electrolyte therein. An inlet for fresh electrolyte may be provided through the stack of plates 41, alongside the spacers 42, 43, and an outlet for electrolyte may be provided adjacent the bottom of the tank for supply to the gas generating cells.

The stack of plates 41 and spacers 42, 43 may be clamped together by two bolts extending from the top plate 41, through the respective series of cooling cells, down through the interior of the tank and to or out through its bottom wall, further spacers being disposed between each pair of adjacent plates with the bolts extending through the respective ones of these further spacers.

A forced flow of air may be provided across the cooling cells on the top of the tank. These cooling cells ensure a minimum temperature for the issuing gas, thus minimising the water vapour pressure, and also trap the corrosive electrolyte drops. The gas outlet path should have a sufficiently large diameter for low gas speed to avoid carrying water or electrolyte drops further.

**Claims**

1. An electrolysis apparatus, comprising at least one stack of cells (14a—14n), the or each said stack being formed by a plurality of vertically disposed electrode plates (10) clamped together with a spacer (12) disposed between each adjacent pair of electrode plates and the spacer being in the form of a closed loop to define (with the adjacent electrode plates) the respective cell, one end cell (14a) or the or each stack having an inlet (16) for electrolyte and an opposite end cell (14n) hving an outlet (18) for generated gas and the electrode plates between adjacent cells in the stack being provided with apertures (20) for the electrolyte to pass from the inlet and then from cell-to-cell in succession and for the generated gas to pass from cell-to-cell in succession to the outlet when a d.c. electrical source is connected across opposite extreme end plates of said plurality of electrode plates, characterised in that the arrangement of cells includes at least one series of gas generating cells (14a—14d) followed (on the electrolyte and gas flow path) by at least one cell (14e) having its pair of electrode plates electrically short-circuited so that this cell is prevented from functioning as a gas generating cell and instead functions as a cooling cell.

2. An apparatus as claimed in claim 1, characterised in that the spacer (12) of the or each cooling cell is formed of electrically conductive material to effect said short circuiting.

3. An apparatus as claimed in claim 1 or 2, characterised in that the cells include at least one series of gas generating cells (14g—14l) following (on the electrolyte and gas flow path) said at least one cooling cell (14e).

4. An apparatus as claimed in claim 2, characterised in that a plurality of separate cooling cells or series of cooling cells alternate with series of gas generating cells.

5. An apparatus as claimed in any preceding claim, characterised in that the overall plurality of cells terminates with a said cooling cell or series of cooling cells.

6. An apparatus as claimed in any preceding claim, characterised in that the cooling and gas generating cells are arranged in separate said stacks of cells, which separate stacks are spaced apart and interconnected by tubing for electrolyte/gas flow.

7. An apparatus as claimed in claim 6, characterised in that the interconnected stacks of cells are arranged alongside one another.

8. An apparatus as claimed in any preceding claim, characterised in that the electrode plates (10) project outwards beyond the spacers (12).

9. An apparatus as claimed in claim 8, characterised in that the spacers (12) are circular and the electrode plates (10) are rectangular or square, with the outer circumference of each spacer tangential to at least two adjacent edges of its associated electrode plates.

10. An apparatus as claimed in any preceding claim, characterised by a said series of cooling cells wherein said apertures (20) in successive electrode plates (10) are alternately adjacent the top and adjacent the bottom of the cells.

11. An apparatus as claimed in any preceding claim, characterised by at least one duct (26) for cooling fluid extending through the successive cells of the or a said stack of cells.

12. An apparatus as claimed in claim 11, characterised in that the or each cooling duct (26) comprises aligned apertures (27) in the electrode plates (10) and a spacer (28) disposed between each pair of adjacent electrode plates and formed with an aperture aligned with said aligned apertures of the electrode plates.

13. An apparatus as claimed in any preceding claim, characterised in that the or each stack of cells includes a bolt (30) extending through its cells and through its electrode plates and serving to clamp together the electrode plates and spacers of that stack.

14. An apparatus as claimed in claim 13, characterised in that a spacer (34) is disposed between each pair of adjacent electrode plates and formed with an aperture through which the bolt extends.

15. An apparatus as claimed in any preceding claim, characterised in that the gas generating cells are diaphragmless, so as to generate detonating gas therein.

16. An apparatus as claimed in any one of claims 1 to 14, characterised in that each gas generating cell is divided into oxygen- and hydrogen-generating portions by a gas-impervious diaphragm (11) disposed between a pair of electrode plates (10) of that cell, a first duct extends through the cells and connects the oxygen-generating portions of the gas generating cells together and to an oxygen outlet (18b) and a second duct extends through the cells and connects the hydrogen-generating portions of the gas generating cells together and to a hydrogen outlet (18a).

17. An apparatus as claimed in claim 16, characterised in that each gas generating cell comprises a first closed-loop spacer (12a) disposed between one electrode plate and the diaphragm (11) and a second closed-loop spacer (12b) disposed between the other electrode plate of the cell and the diaphragm, the electrode plates, diaphragm and spacers being clamped together.

18. An apparatus as claimed in claim 17, characterised in that each of the hydrogen and oxygen ducts comprises aligned apertures through the electrode plates and diaphragms of the successive gas generating cells, with a spacer (15a, 15b) in each of the oxygen- and hydrogen-generating portions disposed between the diaphragm and the respective electrode plate and formed with an aperture for the flow of the respective gas, the spacers affording communication between the oxygen and hydrogen ducts and the respective portions of the gas generating cells.

19. An apparatus as claimed in any one of claims 16 to 18, characterised by a differential pressure sensor coupled to the two gas outlets (18a, 18b) and controlling venting of one gas volume should it exceed a threshold pressure in excess of the other gas volume.

20. An apparatus as claimed in any preceding claim, characterised by a one-way valve at an inlet for electrolyte into the first cell of the apparatus.

21. An apparatus as claimed in any preceding claim, characterised by a vessel containing a fluid under which the cells are immersed.

22. An apparatus as claimed in claim 21, characterised by a heat exchanger and means for circulating the fluid from said vessel, through the heat exchanger and back to said vessel.

23. An apparatus as claimed in any preceding claim, characterised by means for vibrating at least the gas generating cells to promote release of gas from its electrodes.

24. An apparatus as claimed in claim 23, characterised in that said vibrating means comprises a transducer mounted directly to at least one cell electrode.

25. An apparatus as claimed in claim 23, appended to claim 21 or 22, characterised in that said vibrating means comprises a transducer mounted on a wall of said vessel.

26. An apparatus as claimed in any preceding claim, characterised by being combined with an electrolyte tank (40) having a series of cooling cells (41, 43) for receiving gas and electrolyte issuing from the electrolysis apparatus and for passing the gas and electrolyte into the tank.

27. An apparatus as claimed in claim 26, characterised in that the electrolyte tank further comprising a second series of cooling cells (41, 42) for receiving gas from the tank and passing the gas to an outlet (46).

28. An apparatus as claimed in claim 26 or 27, characterised in that the cooling cells of the electrolyte tank comprise a plurality of parallel disposed plates (41) with spacers (43 or 42) between adjacent plates to define the cells, and apertures through the plates to afford a gas/electrolyte flow path.

29. An apparatus as claimed in claim 28, characterised in that the electrolyte tank comprises at least one bolt passing through its said plates (41) and through its said cooling cells, and downwards through the tank (40) and secured to the base of the tank to clamp the plates and spacers of the tank cooling cells together and to the top of the tank.

**Revendications**

1. Appareil d'électrolyse, comprenant au moins un empilement de cellules (14a—14n), l'empilement ou chaque empilement ayant plusieurs électrodes (10) placées verticalement, serrées les unes contre les autres, avec une entretoise (12) placée entre les électrodes adjacentes de chaque paire, l'entretoise formant une boucle fermée qui délimite (avec les électrodes adjacentes) la cellule respective, une cellule d'extrémité (14a) de l'empilement ou de chaque empilement ayant une entrée (16) d'électrolyte et une cellule (14n) de l'extrémité opposée ayant une sortie (10) du gaz dégagé, les électrodes placées entre des cellules adjacentes de l'empilement ayant des ouvertures (20) de circulation de l'électrolyte à partir de l'entrée puis successivement d'une cellule à la suivante, le gaz dégagé passant d'une cellule à la suivante successivement vers la sortie, lorsqu'une alimentation en courant électrique continu est montée entre les plaques opposées d'extrémités des électrodes, caractérisé en ce que l'arrangement des cellules comprend au moins une série de cellules génératrices de gaz (14a—14d) suivies (suivant le trajet de circulation de l'électrolyte et du gaz) par au moins une cellule (14e) dont la paire d'électrodes est mise en court-circuit électrique si bien que cette cellule ne fonctionne pas comme cellule génératrice de gaz et fonctionne au contraire comme cellule de refroidissement.

2. Appareil selon la revendication 1, caractérisé en ce que l'entretoise (12) de la cellule ou de chaque cellule de refroidissement est formé d'un matériau conducteur de l'électricité, assurant la mise en court-circuit.

3. Appareil selon l'une des revendications 1 et 2, caractérisé en ce que les cellules comprennent au moins une série de cellules génératrices de gaz (14g—14l) suivant au moins une cellule de refroidissement (14e) (suivant le trajet de circulation de l'électrolyte et du gaz).

4. Appareil selon la revendication 2, caractérisé en ce que plusieurs cellules séparées de refroidissement ou séries de cellules de refroidissement alternent avec des séries de cellules génératrices de gaz.

5. Appareil selon l'une quelconque des revendications précédentes, caractérisé en ce que l'ensemble des cellules se termine par une cellule ou une série de cellules de refroidissement.

6. Appareil selon l'une quelconque des revendications précédentes, caractérisé en ce que les cellules de refroidissement et génératrices de gaz sont placées dans des empilements séparés de cellules, les empilements séparés étant distants et étant raccordés par des tubes de circulation d'électrolyte et de gaz.

7. Appareil selon la revendication 6, caractérisé en ce que les empilements interconnectés de cellules sont disposés les uns à côté des autres.

8. Appareil selon l'une quelconque des revendications précédentes, caractérisé en ce que les électrodes (10) dépassent vers l'extérieur au-'delà des entretoises (12).

9. Appareil selon la revendication 8, caractérisé en ce que les entretoises (12) sont circulaires et les électrodes (10) sont rectangulaires ou carrées, la circonférence externe de chaque entretoise étant tangente à au moins deux bords adjacents des électrodes associées.

10. Appareil selon l'une quelconque des revendications précédentes, caractérisé par une série de cellules de refroidissement dans lesquelles les ouvertures (20) des électrodes successives (10) sont en alternance adjacentes à la partie supérieure et adjacentes à la partie inférieure des cellules.

11. Appareil selon l'une quelconque des revendications précédentes, caractérisé par au moins un conduit (26) de fluide de refroidissement passant dans les cellules successives de l'empilement ou des empilements de cellules.

12. Appareil selon la revendication 11, caractérisé en ce que le conduit ou chaque conduit de refroidissement (26) comporte des ouvertures alignées (27) formées dans les électrodes (10) et une entretoise (28) placée entre les électrodes adjacentes de chaque paire et ayant une ouverture alignée sur les ouvertures alignées des électrodes.

13. Appareil selon l'une quelconque des revendications précédentes, caractérisé en ce que l'empilement ou chaque empilement de cellules comprend un boulon (30) traversant ces cellules et les électrodes et destiné à serrer les électrodes et les entretoises de cette pile.

14. Appareil selon la revendication 13, caractérisé en ce qu'une entretoise (34) est placée entre les électrodes adjacentes de chaque paire et a une ouverture pour le passage du boulon.

15. Appareil selon l'une quelconque des revendications précédentes, caractérisé en ce que les cellules génératrices de gaz sont dépourvues d'un diaphragme, si bien qu'un gaz détonant est dégagé.

16. Appareil selon l'une quelconque des revendications 1 à 14, caractérisé en ce que chaque cellule génératrice de gaz est divisée en parties dégageant de l'oxygène et de l'hydrogène par un diaphragme (11) imperméable au gaz, placé entre deux électrodes (10) de la cellule, un premier conduit est disposé dans les cellules et relie les parties génératrices d'oxygène des cellules génératrices de gaz les unes aux autres et à une sortie d'oxygène (18b), et un second conduit est formé dans les cellules et relie les parties génératrices d'hydrogène des cellules génératrices de gaz les unes aux autres et à une sortie d'hydrogène (18a).

17. Appareil selon la revendication 6, caractérisé en ce que chaque cellule génératrice de gaz comporte une première entretoise (12a) en boucle fermée, placée entre une première électrode et le diaphragme (11), et une seconde entretoise (12b) en boucle fermée placée entre l'autre électrode de la cellule et le diaphragme, les électrodes, le diaphragme et les entretoises étant serrés mutuellement.

18. Appareil selon la revendication 17, caractérisé en ce que chacun des conduits d'hydrogène et d'oxygène comporte des ouvertures alignées formées dans les électrodes et les diaphragmes des cellules successives génératrices de gaz, une entretoise (15a, 15b) de chacune des parties génératrice d'oxygène et génératrice d'hydrogène étant placée entre le diaphragme et l'électrode respective et ayant une ouverture pour la circulation du gaz respectif, les entretoises assurant la communication entre les conduits d'oxygène et d'hydrogène et les parties respectives des cellules génératrices de gaz.

19. Appareil selon l'une quelconque des revendications 16 à 18, caractérisé par un capteur de pression différentielle couplé aux deux sorties de gaz (18a, 18b) et réglant l'évacuation du volume d'un premier gaz lorsqu'il dépasse une pression de seuil au-delà de celle du volume de l'autre gaz.

20. Appareil selon l'une quelconque des revendications précédentes, caractérisé par un clapet de retenue placé à une entrée d'électrolyte dans la première cellule de l'appareil.

21. Appareil selon l'une quelconque des revendications précédentes, caractérisé par un récipient contenant un fluide sous lequel les cellules sont immergées.

22. Appareil selon la revendication 21, caractérisé par un échangeur de chaleur et un dispositif destiné à faire circuler le fluide provenant du récipient dans l'échangeur de chaleur puis vers ce récipient.

23. Appareil selon l'une quelconque des revendications précédentes, caractérisé par un dispositif destiné à faire vibrer au moins les cellules génératrices de gaz afin que la séparation du gaz des électrodes soit facilitée.

24. Appareil selon la revendication 23, caractérisé en ce que le dispositif de mise en vibration comporte un transducteur directement monté sur au moins une électrode.

25. Appareil selon la revendication 23 dépendant de la revendication 21 ou 22, caractérisé en ce que le dispositif de mise en vibration comporte un transducteur monté sur une paroi du récipient.

26. Appareil selon l'une quelconque des revendications précédentes, caractérisé en ce qu'il est combiné à un réservoir d'électrolyte (40) ayant une série de cellules de refroidissement (41, 43) desintées à recevoir du gaz et de l'électrolyte provenant de l'appareil d'électrolyse et destinées à faire circuler le gaz et l'électrolyte dans le réservoir.

27. Appareil selon la revendication 26, caractérisé en ce que le réservoir d'électrolyte comporte en outre une seconde série de cellules de refroidissement (41, 42) destinées à recevoir le gaz du réservoir et à transmettre le gaz à une sortie (46).

28. Appareil selon l'une des revendications 26 et 27, caractérisé en ce que les cellules de refroidissement du réservoir d'électrolyte comprennent plusieurs plaques parallèles (41) avec des entretoises (43 ou 42) placées entre les plaques adjacentes afin que les cellules soient délimitées, et des ouvertures traversant les plaques et destinées à former un trajet de circulation d'électrolyte et de gaz.

29. Appareil selon la revendication 28, caractérisé en ce que le réservoir d'électrolyte comprend au moins un boulon passant à travers les plaques (41) et dans les cellules de refroidissement, et descendant dans le réservoir (40) et fixé à la base du réservoir afin que les plaques et les entretoises des cellules de refroidissement soient serrées ensemble, et à la partie supérieure du réservoir.

**Patentansprüche**

1. Elektrolysegerät, enthaltend wenigstens einen Stapel von Zellen (14a—14n), wobei der oder jeder der Stapel aus einer Mehrzahl vertikal angeordneter Elektrodenplatten (10) besteht, die, mit einem Abstandshalter (12) zwischen jedem benachbarten Paar Elektrodenplatten, zusammengespannt sind, wobei der Abstandshalter die Form einer geschlossenen Schleife hat, um (mit den benachbarten Elektrodenplatten) die entsprechende Zelle zu bilden, wobei eine Endzelle (14a) des oder jedes Stapels einen Einlaß (16) für Elektrolyt und die entgegengesetzte Endzelle (14n) einen Auslaß (18) für erzeugtes Gas hat und die Elektrodenplatten zwischen benachbarten Zellen im Stapel mit Öffnungen (20) versehen sind, damit der Elektrolyt vom Einlaß und dann, in der Folge, von Zelle zu Zelle hindurchtreten kann und das erzeugte Gas in Folge von Zelle zu Zelle und zum Auslaß gelangen kann, wenn eine elektrische Gleichspannung über die entgegengesetzten Platten am äußersten Ende der Mehrzahl von Elektrodenplatten angelegt wird, dadurch gekennzeichnet, daß die Zellenanordnung wenigstens eine Serie von gaserzeugenden Zellen (14a—14d) aufweist, die (auf dem Elektrolyt- und Gasströmungsweg) von wenigstens einer Zelle (14e) gefolgt wird, deren Elektrodenplattenpaar elektrisch kurzgeschlossen ist, so daß diese Zelle daran gehindert ist, als Gaserzeugungszelle zu arbeiten und stattdessen als eine Kühlzelle wirkt.

2. Gerät nach Anspruch 1, dadurch gekennzeichnet, daß der Abstandshalter (12) in der oder jeder Kühlzelle aus elektrisch leitfähigem Material besteht, um den genannten Kurzschluß zu erzeugen.

3. Gerät nach Anspruch 1 oder 2, dadurch gekennzeichnet, daß die Zellen wenigstens eine Serie von gaserzeugenden Zellen (14g—14l) enthalten, die (auf dem Elektrolyt- und Gasströmungsweg) der genannten wenigstens einen Kühlzelle (14e) folgen.

4. Gerät nach Anspruch 2, dadurch gekennzeichnet, daß eine Mehrzahl getrennter Kühlzellen oder Serie von Kühlzellen mit der Serie von gaserzeugenden Zellen alterniert.

5. Gerät nach einem der vorhergehenden Ansprüche, dadurch gekennzeichnet, daß die Gesamtzahl der Zellen mit einer genannten Kühlzelle oder einer Serie von Kühlzellen endet.

6. Gerät nach einem der vorhergehenden Ansprüche, dadurch gekennzeichnet, daß die Kühlzellen und gaserzeugenden Zellen in getrennten Zellenstapeln angeordnet sind, welche getrennten Stapel im Abstand zueinander angeordnet und durch Rohrleitungen für die Elektrolyt/Gas-Strömung verbunden sind.

7. Gerät nach Anspruch 6, dadurch gekennzeichnet, daß die miteinander verbundenen Zellenstapel nebeneinander angeordnet sind.

8. Gerät nach einem der vorhergehenden Ansprüche, dadurch gekennzeichnet, daß die Elektrodenplatten (10) über die Abstandshalter (12) nach außen vorstehen.

9. Gerät nach Anspruch 8, dadurch gekennzeichnet, daß die Abstandshalter (12) kreisförmig und die Elektrodenplatten (10) rechteckig oder quadratisch sind, wobei der äußere Umfang eines jeden Abstandshalters tangential zu wenigstens zwei benachbarten Kanten seiner zugehörigen Elektrodenplatten verläuft.

10. Gerät nach einem der vorhergehenden Ansprüche, gekennzeichnet durch eine genannte Serie von Kühlzellen, bei denen die Öffnungen (20) in aufeinanderfolgenden Elektrodenplatten (10) alternierend benachbart dem oberen und benachbart dem unteren Ende der Zellen sind.

11. Gerät nach einem der vorhergehenden Ansprüche, gekennzeichnet durch wneigstens eine Leitung (26) für Kühlfluid, das sich durch die aufeinanderfolgenden Zellen des oder eines genannten Zellenstapels erstreckt.

12. Gerät nach Anspruch 11, dadurch gekennzeichnet, daß die oder jede Kühlleitung (26) ausgerichtete Öffnungen (27) in den Elektrodenplatten (10) und einen Abstandshalter (28) enthält, der zwischen jedem Paar benachbarter Elektrodenplatten angeordnet ist und mit einer Öffnung versehen ist, die mit den ausgerichteten Öffnungen der Elektrodenplatten ausgerichtet ist.

13. Gerät nach einem der vorhergehenden Ansprüche, dadurch gekennzeichnet, daß der oder jeder Zellenstapel einen Bolzen (30) enthält, der sich durch seine Zellen und durch seine Elektrodenplatten erstreckt und dazu dient, die Elektrodenplatten und Abstandshalter jenes Stapels zusammenzuspannen.

14. Gerät nach Anspruch 13, dadurch gekennzeichnet, daß ein Abstandshalter (34) zwischen jedem Paar benachbarter Elektrodenplatten angeordnet und mit einer Öffnung versehen ist, durch die sich der Bolzen erstreckt.

15. Gerät nach einem der vorhergehenden Ansprüche, dadurch gekennzeichnet, daß die gaserzeugenden Zellen membranlos sind, um ein Explosivgas darin zu erzeugen.

16. Gerät nach einem der Ansprüche 1 bis 14, dadurch gekennzeichnet, daß jede gaserzeugende Zelle durch eine gasundurchlässige Membran (11), die zwischen einem Elektrodenplattenpaar (10) jener Zelle angeordnet ist, in sauerstoff- und wasserstofferzeugende Abschnitte unterteilt ist, daß sich eine erste Leitung durch die Zellen erstreckt, die die sauerstofferzeugenden Abschnitte der gaserzeugenden Zellen miteinander und mit einem Sauerstoffauslaß (18b) verbindet, und eine zweite Leitung sich durch die Zellen erstreckt, die die wasserstofferzeugenden Abschnitte der gaserzeugenden Zellen miteinander und mit einem Wasserstoffauslaß (18a) verbindet.

17. Gerät nach Anspruch 16, dadurch gekennzeichnet, daß jede gaserzeugende Zelle einen ersten Abstandshalter (12a) in Form einer geschlossenen Schleife enthält, der zwischen einer Elektrodenplatte und der Membran (11) angeordnet ist, und einen zweiten Abstandshalter (12b) in Form einer geschlossenen Schleife enthält, der zwischen der anderen Elektrodenplatte der Zelle und der Membran angeordnet ist, wobei die Elektrodenplatten, die Membran und die Abstandshalter zusammengespannt sind.

18. Gerät nach Anspruch 17, dadurch gekennzeichnet, daß jede der Wasserstoff- und Sauerstoffleitungen ausgerichtete Öffnungen durch die Elektrodenplatten und Membranen der aufeinanderfolgenden gaserzeugenden Zellen aufweist, wobei ein Abstandshalter (15a, 15b) in jedem der sauerstoff- und wasserstofferzeugenden Abschnitte zwischen der Membran der entsprechenden Elektrodenplatte angeordnet ist und mit einer Öffnung für den Durchfluß des entsprechenden Gases versehen ist, wobei die Abstandshalter die Verbindung zwischen den Sauerstoff- und Wasserstoffleitungen und den Entsprechenden Abschnitten der gaserzeugenden Zellen herstellen.

19. Gerät nach einem der Ansprüche 16 bis 18, gekennzeichnet durch einen Differenzdrucksensor, der mit den zwei Gasauslässen (18a, 18b) verbunden ist und den Ablaß eines Gasvolumens steuert, wenn er einen Schwellenwertdruck über das andere Gasvolumen hinaus übersteigt.

20. Gerät nach einem der vorhergehenden Ansprüche, gekennzeichnet durch ein Einwegventil an einem Einlaß für Elektrolyt in die erste Zelle des Gerätes.

21. Gerät nach einem der vorhergehenden Ansprüche, gekennzeichnet durch einen Behälter, der ein Fluid enthält, in das die Zellen eingetaucht sind.

22. Gerät nach Anspruch 21, gekennzeichnet durch einen Wärmetauscher und einrichtungen zum Zirkulieren des Fluides von dem genannten Behälter durch den Wärmetauscher und zurück zu dem genannten Behälter.

23. Gerät nach einem der vorhergehenden Ansprüche, gekennzeichnet durch eine Einrichtung zum Vibrieren wenigstens der gaserzeugenden Zellen, um das Ablösen von Gas von ihren Elektroden zu fördern.

24. Gerät nach Anspruch 23, dadurch gekennzeichnet, daß die Vibriereinrichtung einen Wandler enthält, der direkt auf wenigstens einer Zellenelektrode befestigt ist.

25. Gerät nach Anspruch 23 in Verbindung mit Anspruch 21 oder 22, dadurch gekennzeichnet, daß die Vibriereinrichtung einen Wandler enthält, der an einer Wand des genannten Gefäßes befestigt ist.

26. Gerät nach einem der vorhergehenden Ansprüche, dadurch gekennzeichnet, daß es mit einem Elektrolyttank (40) kombiniert ist mit einer Serie von Kuhlzellen (41, 43) zur Aufnahme von Gas und Elektrolyt, das von dem Elektrolysegerät abgegeben wird und zum Einleiten des Gases und Elektrolyten in den Tank.

27. Gerät nach Anspruch 26, dadurch gekennzeichnet, daß der Elektrolyttank weiterhin eine zweite Serie von Kühlzellen (41, 42) zur Aufnahme von Gas aus dem Tank und zum Hinleiten des Gases zu einem Auslaß (46) aufweist.

28. Gerät nach Anspruch 26 oder 27, dadurch gekennzeichnet, daß die Kühlzellen des Elektrolyttanks eine Mehrzahl parallel angeordneter Platten (41) mit Abstandshaltern (43 oder 42) zwischen benachbarten Platten, die die Zellen begrenzen, enthalten und daß Öffnungen durch die Platten vorgesehen sind, die einen Gas/Elektrolytströmungsweg einrichten.

29. Gerät nach Anspruch 28, dadurch gekennzeichnet, daß der Elektrolyttank wenigstens einen Bolzen enthält, der durch seine genannten Platten (41) und durch seine genannten Kühlzellen und nach unten durch den Tank (40) verläuft und am Boden des Tanks befestigt ist, um die Platten und Abstandshalter der Tankkühlzellen zusammen und an der Oberseite des Tanks zu verspannen.

*Fig.1.*

*Fig.1a.*

FIG. 2.

FIG. 3a.

FIG. 3b.

FIG. 3c.

FIG. 3d.

FIG. 4.

0 045 583

Fig.5.

Fig.7a.

Fig.7

4

Fig.6.

0 045 583

0 045 583

FIG.8.

FIG.9.

AIR COOLING

6